# EUROPEAN PATENT APPLICATION

(11) **EP 2 698 504 A1**
(43) Date of publication of application: **19.02.2014**
(21) Application number: 13189459.4
(22) Date of filing: 17.06.2011
(51) Int. Cl.: F01D 25/16, F01D 25/18, F02C 6/12

(54) **Turbocharger, notably for a combustion engine**

(62) Divisional of application: 11305761.6
(71) Applicant: Aktiebolaget SKF, 41 550 Göteborg (SE)
(72) Inventor: Viault, Samuel, 37360 Saint Antoine Du Rocher (FR); Wensing, Jeoren, 3991 WP Houten (NL); Berruet, Nicolas, 37360 Neuille-Pont-Pierre (FR); Corbett, Richard, 37230 Fondettes (FR)
(74) Representative: Caillet, Isabelle

(57) **Abstract**

The turbocharger comprises a shaft 14, a housing 12, a turbine wheel 20 and a compressor wheel 22 mounted onto the shaft, and at least a rolling bearing 18 disposed between the shaft and the housing and comprising an inner ring 26, an outer ring 28 and at least one row of rolling elements 30 disposed into a rolling space 40 defined between the rings. A damping space 38 is defined between an outer surface 28a of the outer ring and a bore 16 of the housing inside which a lubricant is located.

## Description

The present invention relates to the field of turbochargers, and in particular those used in combustion engines for automotive vehicles.

In such application, a turbocharger is used to enhance the combustion engine performance by blowing compressed air into the cylinders of said engine.

A turbocharger generally comprises a housing, a shaft extending through an opening formed on the housing, a turbine wheel mounted on a first end portion of the shaft and located in an exhaust gases passage of the combustion engine, a compressor wheel mounted on an opposite second end portion of said shaft and located in an admission gases passage of the engine, and rolling bearings disposed between the shaft and the housing. When the turbine wheel is rotated by the flow of the exhaust gases, the shaft and the compressor wheel are rotated which leads to a compression of the admission gases introduced into the cylinders of the combustion engine.

The engine oil may be used for the lubrication of the rolling bearings. However, when the combustion engine stops, the delivery of engine oil is shut off. This causes a strong temperature increase of the residual oil located between the shaft and the rolling bearing near to the turbine wheel. The cooling of said rolling bearing is thus not satisfactory. Otherwise, the engine oil may contain foreign matter, for example small metal particles, thereby causing a premature wear of the rolling bearings.

To overcome these drawbacks, European patent application EP-A2-2 042 758 discloses a turbocharger comprising a tank for storing a specific lubricating oil for the rolling bearings, said tank being formed within the housing. A tube is provided between the storage tank and the space where are housed the rolling bearings to supply by capillary action the lubricating oil. In the disclosed turbocharger, an intermediate bearing casing is also mounted between the rolling bearings and the housing, said casing being equipped with damper rings to reduce the transmission of vibrations emitted by the turbine and compression wheels.

This leads to a complex structure of the turbocharger as well as an increase of the mounting cost.

One aim of the present invention is therefore to overcome the aforementioned drawbacks.

It is a particular object of the present invention to provide a turbocharger which is simple to manufacture and economic, while guaranteeing good sealing and damping properties.

In one embodiment, the turbocharger comprises a shaft, a housing, a turbine wheel and a compressor wheel mounted onto the shaft, and at least a rolling bearing disposed between the shaft and the housing and comprising an inner ring, an outer ring and at least one row of rolling elements disposed into a rolling space defined between the rings. A damping space is defined between an outer surface of the outer ring and a bore of the housing inside which a lubricant is located.

In one embodiment, the turbocharger further comprises at least two sealing means closing at least the rolling space.

In one embodiment, the turbocharger further comprises at least two sealing means closing the damping space and the rolling space.

In one embodiment, the turbocharger further comprises passage means for the lubricant putting the damping space and the rolling space into communication.

In one embodiment, the sealing means are axially offset outwards with respect to the passage means.

The passage means may comprise a gap between the outer ring and the housing. Alternatively or in combination, the passage means comprise holes made in the thickness of the outer ring. The lubricant located inside the damping space may be grease.

In one embodiment, the sealing means are disposed radially between the shaft and the housing.

In another embodiment, the sealing means are disposed radially between the inner and outer rings. The sealing means may only close the rolling space. The rolling space may be filled with a lubricant distinct from the lubricant located in the damping space.

In one embodiment, the axial length of the rolling bearing ranges between 30% and 95% of the axial dimension of the housing, and preferably ranges between 70% and 80%.

The present invention and its advantages will be better understood by studying the detailed description of specific embodiments given by way of non-limiting examples and illustrated by the appended drawings on which:
- Figure 1 is an axial section of a turbocharger according to a first example of the invention, and
- Figure 2 is an axial section of a turbocharger according to a second example of the invention.

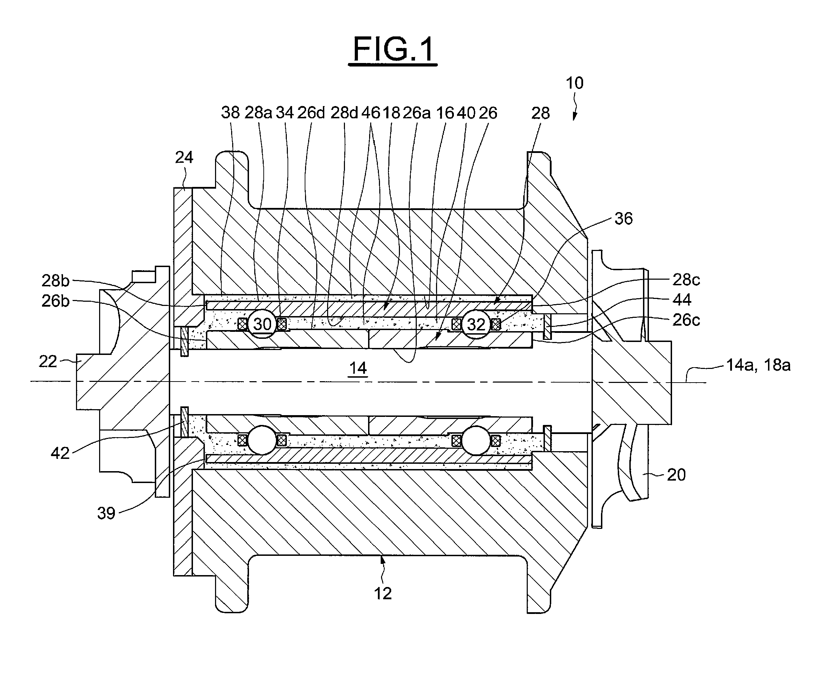

As illustrated on the Figure 1, which illustrates an embodiment of a turbocharger 10 according to an example of the invention, the turbocharger comprises a housing 12, a shaft 14 extending along a longitudinal axis 14a through a cylindrical bore or opening 16 of the housing, a rolling bearing 18 mounted onto the shaft 14 and disposed into the bore 16, a turbine wheel 20 fixed at one end of the shaft 14 and a compressor wheel 22 fixed at an opposite end of said shaft. The housing 12 comprises a cap 24 fixed at one axial end. In the disclosed embodiment, the axial length of the rolling bearing 18 ranges between 60% and 90% of the axial dimension of the bore 16 of the housing, and more precisely between 70% and 80%.

The rolling bearing 18 comprises an inner ring 26 and an outer ring 28 between which are housed two rows of rolling elements 30 and 32, which in this case are balls, and two annular cages 34, 36 respectively maintaining the circumferential spacing of the rolling elements 30, 32. The axis 18a of the rolling bearing is coaxial with the axis 14a of the shaft of the turbocharger.

The inner and outer rings 26, 28 are concentric and symmetric with respect to a transverse radial plane passing through the centre of the rolling bearing. The rings 26, 28 are of the solid type. A "solid ring" is to be understood as a ring obtained by machining with removal of material (by machining, grinding) from metal tube stock, bar stock, rough forgings and/or rolled blanks.

The outer ring 28 comprises an outer cylindrical surface 28a delimited by opposite radial lateral surfaces 28b and 28c, the radial surface 28c axially come into contact with a radial shoulder of the housing 12. The outer ring 28 also comprises a bore 28d of cylindrical shape from which are formed toroidal raceways (not referenced) having in cross-section a concave internal profile adapted to the rolling elements 30, 32. The raceways are symmetrical with respect to the transverse radial plane passing through the centre of the rolling bearing.

An annular radial gap or space 38 exists between the outer surface 28a of the outer ring and the bore 16 of the housing. The annular space 38 is delimited radially by the outer ring 28 and the bore 16 of the housing, and axially by the radial shoulder of said housing and the cap 24. An annular axial space or gap 39 is defined between the radial surface 28b of the outer ring and the cap 24.

In the disclosed embodiment, the inner ring 26 is made in two parts which are identical, symmetrical with respect to the transverse radial plane of symmetry of the rolling bearing and mounted axially fixedly one against the other. The inner ring 26 is here composed of two identical half-rings. Alternatively, the inner ring may be made into one part. The inner ring 26 has a bore 26a of cylindrical shape into which the shaft 14 is mounted. Said bore is delimited by opposite radial lateral surfaces 26b and 26c, which are respectively coplanar with the lateral surfaces 28b, 28c of the outer ring. The radial surface 26c axially bears against a radial shoulder of the shaft 14. The inner ring 26 also comprises an exterior cylindrical surface 26d onto which first and second toroidal circular raceways (not referenced) are formed. The said raceways have in cross-section a concave internal profile adapted to the rolling elements 30 and 32, the said raceways being directed radially outwards. The raceways are symmetrical with respect to the transverse radial plane passing through the centre of the rolling bearing.

An annular rolling space 40 is defined between the inner and outer rings 26, 28 in which the rolling elements 30, 32 and the associated cages 34, 36 are housed. The rolling space 40 is delimited radially by the exterior surface 26d of the inner ring and the bore 28d of the outer ring, and axially by the radial surfaces 26b, 28b and 26c, 28c of said rings.

The turbocharger 10 is further provided with a sealing ring 42 mounted radially between the shaft 14 and the cap 24 and axially disposed between the compressor wheel 22 and the rolling bearing 18, and with an annular sealing ring 44 disposed radially between the shoulder of said shaft 14 and the bore 16 of housing and axially mounted between the rolling bearing 18 and the turbine wheel 20. The sealing ring 42 is located axially between the radial surfaces 26b, 28b of the inner and outer rings and the compressor wheel 22, the sealing ring 44 being located axially between the radial surfaces 26c, 28c of said rings and the turbine wheel 20. The sealing rings 42, 44 are identical to one another and apply a static sealing with the shaft 14 and a dynamic sealing respectively with the cap 24 and the housing 12. The sealing rings 42, 44 are fitted into grooves (not referenced) provided on the exterior surface of the shaft 14, extend radially and respectively come into sliding contact with the cap 24 and the housing 12. Alternatively, the sealing rings may remain at a small distance from said cap and housing. The sealing rings 42, 44 are made from metal, advantageously from a thin metal sheet blank. Alternatively, the sealing rings may be made by moulding a synthetic material such as an elastomer. The sealing rings 42, 44 are continuous in the circumferential direction. To facilitate there fitting into the grooves of the shaft 14, each of the sealing rings may alternatively be open at a point of its circumference.

The sealing rings 42, 44 close from the outside the rolling space 40 of the rolling bearing and the annular space 38 defined between the outer ring 28 of said bearing and the bore 16 of the housing. A single lubricant 46, such as grease, may be used to fill the annular radial spaces 38, 40. The lubricant 46 disposed into the radial space 38 may enable to damp the vibrations emitted by the rotation of the turbine and compressor wheels 20, 22. The transmission of the vibrations emitted by said wheels to the housing 12 may be limited. The radial space 38 filled with lubricant 46 acts as a damping space. The damping space 38 communicates with the rolling space 40 via the axial annular gap 39 defined between the outer ring 28 and the cap 24. Said gap 39 forms passage means for the lubricant 46 communicating with the damping space 38 and the rolling space 40. The sealing ring 42, 44 have a dual function, namely to prevent ingress of undesirable external polluting elements into the rolling bearing 18 and to keep the lubricant 46 into the damping space 38 and the rolling space 40. The lubricant 46 is introduced during the assembly of the turbocharger.

In the disclosed embodiment, the axial gap 39 for the lubricant enables to put the damping space 38 and the rolling space 40 into communication. Alternatively or in combination, it could also be possible to made radial through-holes in the thickness of the outer ring 28 to form passage means for the lubricant between the damping space 38 and the rolling space 40.

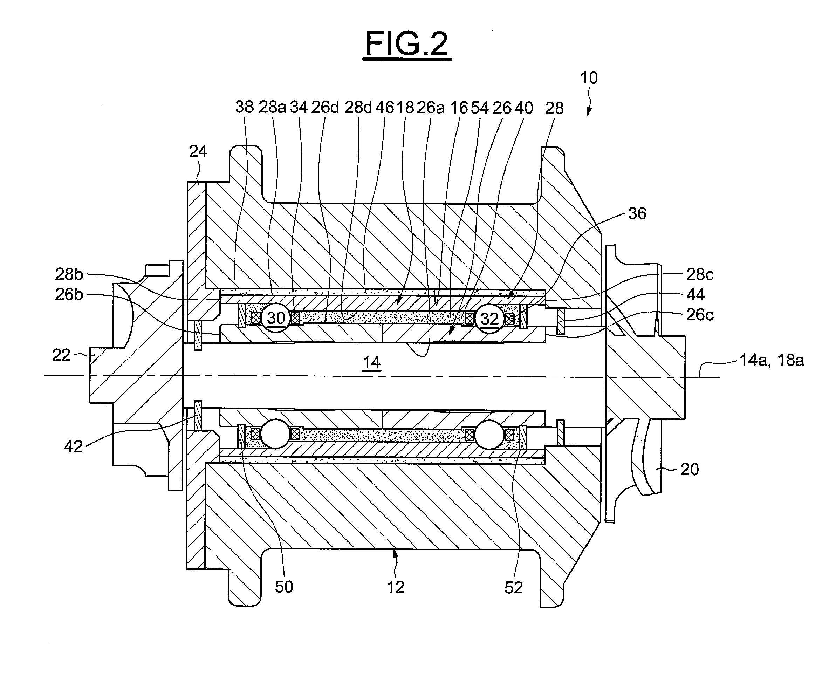

The embodiment shown on Figure 2, in which identical parts are given identical references, differs from the previous embodiment in that the radial surface 28b of the outer ring axially comes into contact with the cap 24 of the housing, and in that the rolling bearing 18 further comprises annular sealing rings 50, 52 disposed radially between the inner and outer rings 26, 28. The sealing rings 50, 52 are fitted inside annular grooves (not referenced) formed radially towards the inside from the exterior surface 26d of the inner ring, respectively in the vicinity of the radial surfaces 26b, 26c. The sealing rings 50, 52 are symmetrical with one another relative to the transverse radial plane of symmetry of the rolling bearing. Each sealing ring 50, 52 extends radially towards the outer ring 28 and comes into sliding contact with the bore 28d of said ring. Alternatively, the sealing rings may remain at a small distance from said bore. The sealing rings 50, 52 are made from metal or from a synthetic material.

The sealing ring 50 is axially situated on the compressor wheel side and the sealing ring 52 on the turbine wheel side. The sealing ring 50 is located axially between the row of rolling elements 30 and the radial surfaces 26b, 28b of the inner and outer rings, the sealing ring 52 being mounted axially between the row of rolling elements 32 and the radial surfaces 26c, 28c of said rings. In this embodiment, the rolling space 40 inside which are housed the rolling elements 30, 32 and the cages 34, 36 is axially delimited by the radial sealing rings 50, 52. The closed rolling space 40 is filled which a lubricant 54, such as grease. The lubricant 54 may be distinct from the lubricant 46 used into the damping space 38. The sealing rings 50, 52 only close the rolling space 40, the damping space 38 being closed by the outer ring 28, the housing 12 and the cap 24. The damping space 38 and the rolling space 40 are not in communication with one another.

In another embodiment, with such sealing rings 50, 52 and the axial contact between the radial surface 28b of the outer ring and the cap 24, it could also be possible to made radial through-holes in the thickness of said outer ring axially between the rows of rolling elements 30, 32 to obtain passage means for the lubricant putting the damping space 38 and the rolling space 40 into communication. In this case, the sealing rings close the two spaces 38, 40 and the lubricant 46, 54 is the same for both spaces.

In another variant, the turbocharger 10 may be not provided with sealing rings 42, 44, 50, 52 and the rolling bearing 18 is directly lubricated by the engine oil.

It should be noted that the embodiments illustrated and described were given merely by way of non-limiting indicative examples and that modifications and variations are possible within the scope of the invention. The invention applies not only to turbocharger comprising an angular contact ball rolling bearing with a double rows of balls but also to turbocharger comprising other types of rolling bearing, for example rolling bearing having four points contact and/or with a single row of balls or with at least three rows of balls.

Furthermore, the invention applies to rolling bearings comprising a plurality of inner rings and/or a plurality of outer rings. Finally, it has to be made clear that by a turbocharger it is also meant a waste heat recovery turbine, a turbocompound or a compressor.

## Claims

1. Turbocharger comprising a shaft (14), a housing (12), a turbine wheel (20) and a compressor wheel (22) mounted onto the shaft, and at least a rolling bearing (18) disposed between the shaft and the housing and comprising an inner ring (26), an outer ring (28) and at least one row of rolling elements (30) disposed between raceways formed on the rings and housed into a rolling space (40) defined between the rings, **characterized in that** a damping space (38) is defined between an outer surface (28a) of the outer ring and a bore (16) of the housing inside which a lubricant is located, said damping space being closed by the outer ring (28) and the housing (12), the turbocharger further comprising at least two sealing means (50, 52) closing the rolling space (40).

2. Turbocharger according to claim 1, wherein the sealing means (50, 52) are disposed radially between the inner and outer rings.

3. Turbocharger according to claim 2, further comprising additional sealing means (42, 44) disposed radially between the shaft (14) and the housing (12).

4. Turbocharger according to any of the preceding claims, wherein the damping space (48) is closed by the outer ring (28), the housing (12) and a cap (24) fixed at one axial end of said housing.

5. Turbocharger according to claim 4, wherein a radial surface (28b) of the outer ring axially comes into contact with the cap (24) of the housing.

6. Turbocharger according to any of the preceding claims, wherein the damping space (48) and the rolling space (40) are not in communication with one another.

7. Turbocharger according to any of the preceding claims, wherein the rolling space (40) is filled with a lubricant distinct from the lubricant located in the damping space (38).

8. Turbocharger according to any of the preceding claims 1 to 5, further comprising passage means for the lubricant putting the damping space (38) and the rolling space (40) into communication.

9. Turbocharger according to claim 8, wherein the passage means comprise holes made in the thickness of the outer ring.

10. Turbocharger according to any of the preceding claims, wherein the lubricant located inside the damping space (38) is grease.

11. Turbocharger according to any of the preceding claims, wherein the lubricant located inside the rolling space (40) is grease.

12. Turbocharger according to any of the preceding claims, wherein the axial length of the rolling bearing (18) ranges between 30% and 95 % of the axial dimension of the housing (12), and preferably ranges between 70 % and 80 %.
